Europäisches Patentamt

European Patent Office

Office européen des brevets

(19)

(11) Publication number: **0 501 135 A2**

## EUROPEAN PATENT APPLICATION

(12)

(21) Application number: **92100969.2**

(22) Date of filing: **22.01.92**

(51) Int. Cl.⁵: **H04B 7/005**

Priority: 230191 ITA RM0004991.

(30) Priority: **23.01.91**

(43) Date of publication of application:
**02.09.92 Bulletin 92/36**

(84) Designated Contracting States:
**AT DE FR GB NL SE**

(71) Applicant: **VITROSELENIA S.P.A.**
**Via Tiburtina 1020**
**I-00131 Roma(IT)**

(72) Inventor: **Ehsani, Shahrokh**
**Via del Calcio 33**
**I-00142 Roma(IT)**
Inventor: **Ouagliariello,Giuseppe**
**Via della Tecnica 22**
**I-00040Roma(IT)**

(74) Representative: **Gustorf, Gerhard, Dipl.-Ing.**
**Patentanwalt Dipl.-Ing. Gerhard Gustorf**
**Bachstrasse 6 A**
**W-8300 Landshut(DE)**

(54) **Broad-band mobile radio link for high-volume transmission in an environment with multiple reflections.**

(57) Digital radio link capable to solve the problem of high-volume data transmission in environments with multiple reflections, such as urban areas, inside buildings, etc. The said radio link can be used as:
- radiotelephone networks;
- local networks for connecting computers;

Essentially, it consists of a standard transmitter and a receiver consisting in turn of an antenna (1), a circulator (2), a pass band filter (3), a LNA amplifier (4), a group of frequency converters (5, 6 and 12), an AGC amplifier, a buffer (8), a bank of matched filters (9), an amplifier (13) compensating the filter losses, a quadratic detector (14), a path combiner (15), a video amplifier (16), a matched threshold generator (17), a bank of comparators ((18), a decision-making block (19) (essentially consisting of a multiplexer), a time-base regenerator (20), an alarm (21). It places itself in the field of microwave telecommunication, for civil and military use.

EP 0 501 135 A2

Fig. 3

Description of the Invention

The present invention relates to a radio link capable to solve the problem of high-volume data transmission in an environment with multiple reflections, such as urban areas, inside buildings, etc. Due to its original construction this radio link can perform multiple functions such as being used as a radio telephone , as a local network for the connection of computer networks, as a means to transmit data beyond 1 Mbit/sec for IF channels for 100 mw of radiated power with a fidelity higher than ten at least seven. This invention eliminates the inconveniences which impair the radio communications between self-propelled carriers in an urban environment and inside buildings. Inconveniences which can be summarized as follows:

1/ the rapid variation of power of tens of dB in spaces distanced from each other by a fraction of a wave length;

2/ the multiple echoes which deform the shape of the transmitted wave.

The first inconvenient, which causes modulations during motion leads to a decrease in the ratio signal/noise, is eliminated by the use of the proposed system, the antenna with multiple elements (the object of another patent application to which the present application makes reference).

The second inconvenient is overcome by using a receiver with an echo detection sweep which allows to resolve the echoes distanced from each other by 1/255 of the length of 1 bit, resulting in the fact that the multiple echoes, instead of downgrading, contribute with their share of information to the signal demodulation. In the proposed radio link, two types of orthogonality are used on the same radio frequency. The first orthogonality type is due to the pseudo-aleatory codes which allow multiple access and the other orthogonality is obtained by the use of hardware with acoustic surface waves which give a decoupling in medium frequency equal to 20 log 2 f.T (wherein T is the duration of 1 bit), and this allows a more efficient use of the band.

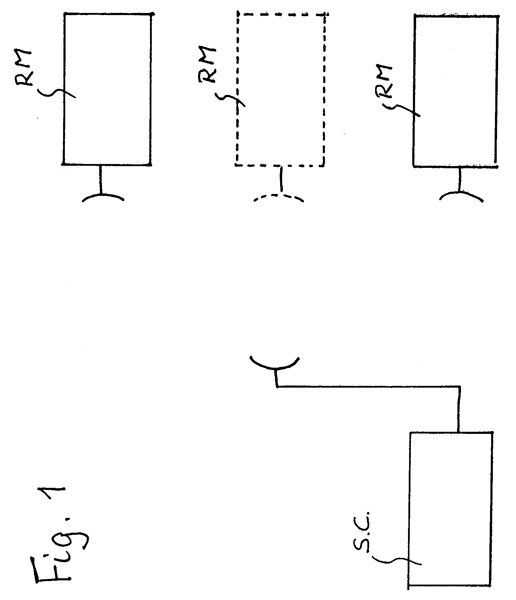

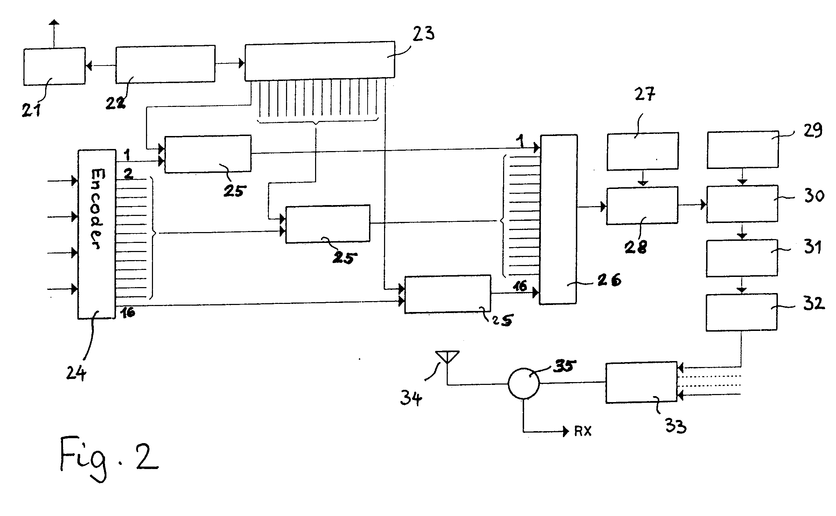

The use of this band in this system, as anywhere else, is a consequence of Shannon's theorem. The system, in its version for civil protection, is illustrated in Fig. 1.

To each mobile radio, a certain number of pseudo aleatory codes with auto-optimal / minimum energy characteristics in the lobes is assigned, also if necessary, the intermediate frequency which acts from recognition elements of mobile robots. The supervising station receives through the radio link all the data collected by the sensors arranged on the self-propelled carriers and gives the orders which have to be carried out by the mobile robots. The antenna system of the robot is not sensitive to rapid variations due to the distribution of RAYLEIGH, RICE and NAGAKAMI, and by reciprocity, the antenna of the supervising station receives a power free of the the quick variations due to motion.

If an improved use of the band is desired, one can resort to coding in transmission and decoding in reception.

The invention is further described in a non-limitative manner for the purpose of illustration, with reference to the enclosed figures.

Fig. 1 shows the block diagram of the radio link. There can be seen at:

| | |
|---|---|
| 22 | time-base generator; |
| 21 | time-base divider/synchronism of data; |
| 23 | generator of pseudo-aleatory codes; in the sense of auto-optimal / lowest energy in the lobes (see appendix); |
| 24 | encoder; |
| 25 | multiplier, output of coding ability, code passage; |
| 26 | conveyor; |
| 27 | oscillator of intermediate frequency I.F. in phase with the pseudo-aleatory coder psk (phase shift keying " binary phase modulations from 0 to 180 degrees; |
| 28 | PSK modulator; |
| 29 | RF oscillator; |
| 30 | converter/frequency translator; |
| 31 | filter; |
| 32 | narrow-band amplifier; |
| 33 | power adder; |
| 34,35 | circulator and antennas. |

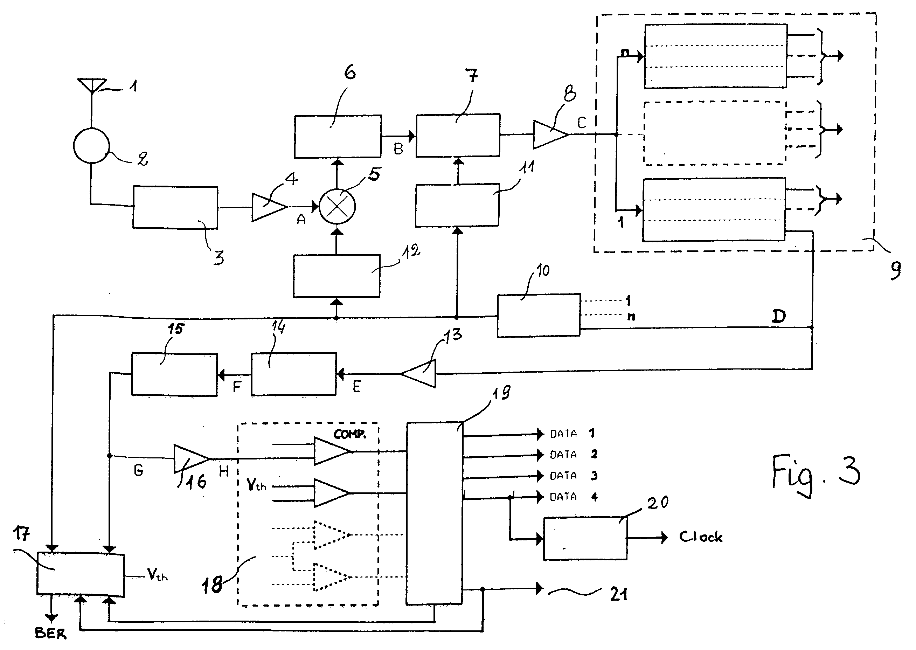

Fig. 3 shows the block diagram of the figure which is the most representative for the invention, the diagram of the broad-band receiver, quadratic detector with double orthogonality. There can be seen at:

| | |
|---|---|
| 1 | antenna with multiple elements with spatial diversity insensitive to rapid power variations in space ( see patent application RM 91 A 000048); |
| 2 | circulator; |

3       pass band Chebyshef filter with 4 poles;
4       amplifier with a gain of 40 dB and 1.8 dB noise level;
5       frequency converter
6       Bessel filter;
7       amplifier with dynamic gain control of 30 dB;
8       amplifier buffer capable to furnish -10 dBm to each filter matched to acoustic surface waves;
9       banks of matched filters. Each bank consists of of 18 filters;
10      adder of output of the matched filter bank;
11      circuit for automatic gain control;
12      local oscillator;
13      bank of amplifiers to compensate the losses of matched filters (approximately 35 dB);
14      quadratic detector with low pass
15      combiner/adder bank for returns, which essentially is an integrator with 6.6 T wherein T is the duration of the bit;
16      bank of video amplifiers
17      generators with matched threshold
18      bank of comparators;
19      decision-making block;
20      time-base regenerator;
21      alarms;

In conclusion, the characteristics of the system can be summarized as follows:
- in the antenna the spatial diversity to overcome the inconveniences of quick attenuations;
- by not using the antipodal wave shape, the quadratic detector performs a filtering of the post-detection: this filtering consists in the fact that any return result is weighed with a weight proportional to its value;
- filters matched to acoustic surface wave which do not require any kind of synchronism;
- the resulting system is robust, resistant to disturbances such as white noise over the entire extension of the band and to non-Gaussian noises in narrow band.

The code generating function is

$$h(n) \ = \ h_1(n) \, h_2(n) \ = \ x^{12} + x^9 + x^7 + x^6 + x^5 + x^4 + x^2 + x^1$$

with the initial phases shown in a numerical table representing the initial conditions of the phase shifters with twelve cells. By applying this table the following outputs result

| 010 | 011 | 101 | 111 |
|-----|-----|-----|-----|
| 010 | 011 | 010 | 110 |
| 011 | 101 | 101 | 001 |
| 111 | 100 | 011 | 000 |
| 101 | 110 | 011 | 110 |
| 011 | 111 | 001 | 000 |
| 101 | 000 | 100 | 100 |
| 000 | 010 | 110 | 001 |
| 000 | 110 | 001 | 111 |
| 100 | 110 | 110 | 110 |
| 000 | 100 | 101 | 100 |
| 011 | 001 | 011 | 100 |
| 010 | 101 | 111 | 111 |
| 011 | 100 | 001 | 110 |
| 111 | 101 | 111 | 111 |
| 000 | 010 | 000 | 101 |

Further, the working of the invention, whose novel aspect resides essentially in the receiver, is described for the purpose of illustration, but in a non-limitative manner.

The antenna (1) picks up the signal and conveys it by means of the circulator (2) to the filter PB (pass band) (3) to the amplifier (4), the converter group (5, 6 12) to the amplifier with AGC (automatic gain control). Given the receiver with multiple access, the signal from the AGC control is drawn from the output

4

of the filter bank (10). The buffer amplifier (8) distributes in an equivalent manner the transmitted signal which in the meantime has suffered a noticeable loss (more than 35 dB), this signal is nevertheless amplified by amplifier (13), regaining sufficient power to be detected by the quadratic detector (14). The multiple returns are this way combined in the combiner (15) of the path which acts (the combiner) as an integrator with a time constant of 0.8 Tb (bit time) and are sent either to the video amplifier (16) or to the generator (17) with matched threshold in the comparator (18). The output of comparator (18) goes to the decision-making block (19) (block which is essentially a demultiplexer) from where the transmitted data emerge. From the data also the times are retrieved (by means of the time-base regenerator (20). The decision-making block is designed so that in case more than one comparator is activated, it triggers an alarm which lifts the threshold, besides the threshold generator supplies the BER (Bit Error Rate).

**Claims**

1. Broad-band mobile radio link for high-volume transmission of digital data in an environment with multiple reflections, characterized in that it consists essentially of a standard broad-band transmitter which does not use the antipodal wave form and of a receiver which in turn consists of an antenna (1), a circulator (2), a pass band filter (3), an LNA amplifier (4), a frequency converter group (5, 6 and 12) , an amplifier complex with AGC (7) (10) (11), a buffer (8) a bank of matched filters, an amplifier compensating the filter losses ((13), a quadratic detector (14), a path combiner (15), a video amplifier (16) a matched threshold generator (17), a bank of comparators (18) a decision-making block (19) (essentially consisting of a demultiplexer), a time-base regenerator (20), an alarm (21).

2. Broad-band mobile radio link for the high-volume transmission of digital data in environments with multiple reflections, characterized in that it uses the antenna disclosed in the patent application No. RM 91 A 000048 with multiple elements with spatial diversity.

3. Broad-band mobile radio link for high-volume transmission of digital data in environments with multiple reflections, characterized by the fact that the AGC amplifier is relieved of the noise charge, since the signal for the control of the AGC level is picked up at the outlet of the matched filters.

4. Broad-band mobile radio link for high volume digital data transmission in environments with multiple reflections, characterized by the fact that in the matched filter the following actions are carried out: sampling in 256 parts of the bit, combination according to weight equal to the initial weight, which makes possible the gain of the process, and as a result of the above operations a receiver with an echo detection sweep is achieved.

5. Broad-band mobile radio link for high-volume digital data transmission in environments with multiple reflections, characterized in that the frequency converter group consists of a local oscillator (12), a mixer (5) and a Bessel filter (6).

6. Broad-band mobile radio link for high-volume digital data transmission in environments with multiple reflections, characterized by the fact that the amplifier group consists of an amplifier (7), an AGC circuit (11) and a control command (10).

Fig. 1

Fig. 2

Fig. 3